# EUROPEAN PATENT SPECIFICATION

(11) **EP 3 457 414 B1**
(45) Date of publication and mention of the grant of the patent: **17.02.2021**
(21) Application number: 16901590.6
(22) Date of filing: 09.05.2016
(51) Int. Cl.: G21C 3/328, G21C 5/20

(54) **FUEL ASSEMBLY AND NUCLEAR REACTOR CORE LOADED WITH SAME**
BRENNSTABBÜNDEL UND DAMIT BELADENER KERNREAKTORKERN
ENSEMBLE COMBUSTIBLE ET COEUR DE RÉACTEUR NUCLÉAIRE CHARGÉ AVEC CELUI-CI

(43) Date of publication of application: 20.03.2019
(73) Proprietor: Hitachi, Ltd., Chiyoda-ku Tokyo 100-8280 (JP)
(72) Inventor: MITSUYASU, Takeshi, Tokyo 100-8280 (JP); HINO, Tetsushi, Tokyo 100-8280 (JP); ONO, Michitaka, Tokyo 100-8280 (JP)
(74) Representative: MERH-IP Matias Erny Reichl Hoffmann Patentanwälte PartG mbB
(86) International application number: PCT/JP2016/063702
(87) International publication number: WO 2017/195241

(56) References cited:
- JP-A- H0 545 482
- JP-A- H0 821 890
- JP-A- 2008 032 467
- JP-A- 2012 208 125
- US-A- 5 112 570
- US-A1- 2010 034 336
- TETSUSHI HINO et al.: "Kaku Haikibutsu no Kankyo Fuka o Teigen suru Keisuiro System = [LWR system to reduce environmental impact of nuclear waste]", Hitachi Hyoron, vol. 96, no. 7/8, July 2014 (2014-07), pages 76-82, XP009511932, ISSN: 0367-5874

## Description

### Technical Field

The present invention relates to a fuel assembly and a reactor core loaded with the same, and more particularly to a fuel assembly suitable for burning transuranium elements (TRU) and a nuclear reactor core loaded with the same.

### Background Art

A plurality of fuel assemblies is loaded in a reactor core of a boiling water reactor. The fuel assembly includes a plurality of fuel rods enclosing a plurality of fuel pellets containing a nuclear fuel material (for example, uranium oxide), an upper tie plate for supporting the upper ends of the fuel rods, a lower tie plate for supporting the lower ends of the fuel rods, a plurality of fuel spacers for maintaining the spacing between the fuel rods, and a channel box. The channel box has an upper end attached to the upper tie plate and extends toward the lower tie plate and surrounds a plurality of fuel rods bundled by a plurality of fuel spacers.

Power generation with mixed oxide fuels (MOX fuel) is performed in which after the fuel is used in the reactor, plutonium is recovered from the spent fuel in the reprocessing process and burned in a light water reactor as a MOX fuel. In this method, although fissile plutonium can be burned mainly, minor actinide (hereinafter, referred to as MA), a higher-order nuclide, can be produced. The combination of plutonium and MA is referred to as TRU. The transuranium elements are products formed after uranium is burned in the reactor, and because of the long half-life of some nuclides, long-term storage is necessary to reduce harmfulness to a natural uranium level.

In order to solve this problem, nuclear reactor systems burning transuranium elements have been proposed. Nuclear fission is used as a method to reduce transuranium elements, but fertile nuclides have small fission cross section. However, since the fission cross section becomes relatively large in the high energy region, by hardening the neutron spectrum in the reactor core, the incineration of transuranium elements is promoted. Therefore, unlike the light water reactors in the related art, reactor cores or fuels capable of hardening neutron spectra is used.

As a reactor core capable of burning transuranium elements, there is a incinerationburning reactor core using the principle of a boiling water reactor. In a boiling water reactor, when water is heated to become steam (void), the hydrogen atom density per unit volume decreases, so that neutron moderation is suppressed. Utilizing this fact, it is possible to adopt a configuration suitable for incineration of transuranium elements by using a reactor core and a fuel structure excluding water.

For a method of efficiently burning MA in an existing boiling water reactor, for example, a technique described in PTL 1 has been proposed. As described above, in the boiling water reactor, the proportion of steam is high in the upper part of the reactor core, so the neutron spectrum becomes hard. Therefore, in PTL 1, MA is loaded in the upper fuel region together with the enriched uranium fuel and MOX fuel generally used in the boiling water reactor, and the lower fuel region and the intermediate fuel region are not loaded with MA, thereby increasing the incineration efficiency of the MA. PTL 2 discloses a core of a light water reactor having a plurality of fuel assemblies, which are loaded in said core, having nuclear fuel material containing a plurality of isotopes of transuranium nuclides, an upper blanket zone, a lower blanket zone, and a fissile zone, in which the transuranium nuclides are contained, disposed between the upper blanket zone and the lower blanket zone.

### Citation List

### Patent Literature

PTL 1: JP-A-05-45482
PTL 2: US 2010/034336 A1

### Summary of Invention

### Technical Problem

Fuel loaded with MA is used with enriched uranium fuel and MOX fuel. Generally, in a boiling water reactor, when the void fraction increases, neutron moderation is suppressed and the neutron spectrum becomes hard. This suppresses the fission reaction. In addition, MA has the effect of the neutron spectrum hardening because the nuclear fission reaction cross section is small and the absorption cross section is large in low energy neutron, compared with fissile material. As disclosed in PTL 1, when MA is loaded in the upper fuel region, the fission proportion of MA increases, but the fission reaction is reduced (power becomes low) due to the neutron spectrum hardening. As a countermeasure against this, a method of smoothing out an power distribution in the upper and lower parts in the axial direction by increasing the proportion of fissile material in the upper fuel region is conceivable, but in this case, if the fissile material becomes too much, there arises a problem that fission by MA is inhibited.

If the TRU loading amount increases and the fertile TRU loading amount increases, when it is assumed that the fuel horizontal cross-section is infinitely continuous (infinite lattice), the reactivity to the void is positive. Further, lowering the proportion of moderator (water) to fuel in the system has the same effect. This is opposite to the reaction of the voids in the boiling water reactor described above. In such a reactor core, the power tends to become high as the upper part of the reactor core.

Therefore, in order to smooth out the power peaking to be within the design limit value, it is necessary to lower the power by reducing the proportion of TRU in the upper fuel region. A flat reactor core structure is obtained because the reactivity of voids in a reactor core is negative from the viewpoint of safety, and as a result, a problem occurs that the loading amount of transuranic elements (TRU) in the reactor core is reduced and the incineration amount of fertile TRU is reduced.

Accordingly, the present invention provides a fuel assembly which is capable of smoothing out axial power distribution of a reactor core and increasing the incineration efficiency of fertile TRU, and a nuclear reactor core loaded with the same.

### Solution to Problem

The aforementioned object is solved by the invention according to the independent claim 1. Further preferred developments are described by the dependent claims.In particular, a fuel assembly according to the present invention has an upper fuel region and a lower fuel region along an axial direction, proportions of fertile transuranium elements among heavy metals in the upper fuel region and the lower fuel region are 20 wt% or more, and a proportion of fertile transuranium elements contained in the upper fuel region is greater than a proportion of fertile transuranium elements contained in the lower fuel region.

A nuclear reactor core according to the present invention is loaded with a plurality of fuel assemblies, the fuel assembly having an upper fuel region and a lower fuel region along an axial direction, proportions of fertile transuranium elements among heavy metals in the upper fuel region and the lower fuel region are 20 wt% or more, and a proportion of fertile transuranium elements contained in the upper fuel region is greater than a proportion of fertile transuranium elements contained in the lower fuel region.

### Advantageous Effects of Invention

According to the present invention, it is possible to provide a fuel assembly which is capable of smoothing out axial power distribution of a reactor core is smoothed out and increasing the incineration efficiency of fertile TRU, and a nuclear reactor core loaded with the same.

The problems, configurations, and effects other than those described above will be clarified by the following description of the embodiments below.

### Brief Description of Drawings

[Fig. 1] Fig. 1 is an overall schematic configuration diagram of a fuel assembly according to Embodiment 1 of the present invention.
[Fig. 2] Fig. 2 is a sectional view (horizontal sectional view) of the fuel assembly taken along line A-A of Fig. 1.
[Fig. 3] Fig. 3 is an axial direction (height direction) distribution diagram of a nuclear fuel material used in the fuel assembly of Embodiment 1.
[Fig. 4] Fig. 4 is an explanatory diagram showing a relationship between the proportion of fertile TRU and a void reactivity coefficient, in a system with the proportion of a moderator of 1.4 to a nuclear fuel material.
[Fig. 5] Fig. 5 is a schematic configuration diagram of a resource-renewable boiling water reactor including a reactor core loaded with the fuel assembly shown in Fig. 1.
[Fig. 6] Fig. 6 is an axial direction (height direction) distribution diagram of a nuclear fuel material used in a fuel assembly of Embodiment 2 according to another embodiment of the present invention.
[Fig. 7] Fig. 7 is an axial direction (height direction) distribution diagram of a nuclear fuel material used in a fuel assembly of Embodiment 3 according to another embodiment of the present invention.

### Description of Embodiments

The inventors or the like of the present invention repeated various examinations and found a new configuration that increases the incineration efficiency of fertile TRU. The results of these examinations and the newly found fuel assembly will be generally described below.

As in the related art, when fertile TRU such as MA are loaded in the upper fuel region in a boiling water reactor (BWR), the neutron spectrum becomes hard, the power becomes low, and the incineration amount of fertile TRU decreases. Therefore, the present inventors or the like thought that it would be better to load at a position in the fuel effective region where the power is likely to increase when the spectrum becomes hard. However, the reaction in which the power increases when the spectrum becomes hard means that the void reactivity coefficient becomes a positive side in the boiling water reactor. If the void reactivity coefficient is positive by loading fertile TRU, the void reactivity coefficient of the reactor core shifts to the positive side, and as a result, the safety of the reactor core decreases.

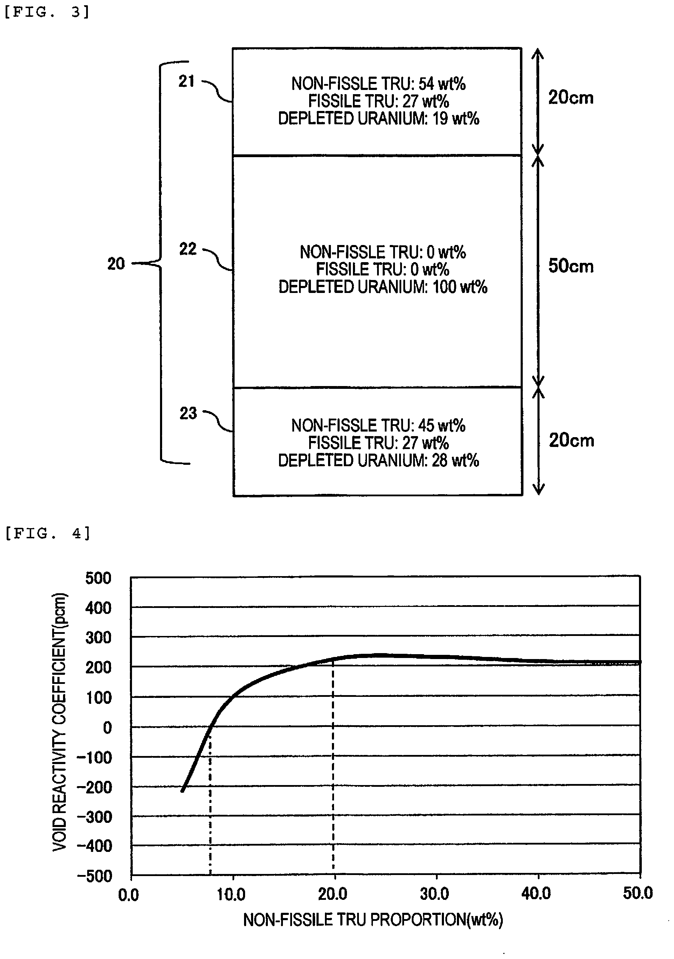

Therefore, the present inventors and the like performed evaluation with regard to the void reactivity coefficient regarding the loading amount of the fertile TRU. Fig. 4 is an explanatory diagram showing a relationship between the proportion of fertile TRU and a void reactivity coefficient, in a system with a moderator-to-nuclear fuel material ratio being 1.4. Note that the system with the moderator-to-nuclear fuel material ratio being 1.4 means that the volume of the cooling water which is the moderator is 1.4 times the volume of the nuclear fuel material. The nuclear fuel material used for the evaluation uses depleted uranium as a base material, and contains fissile TRUin a ratio of loading amount of fertile TRU : the loading amount of fissile TRU = 2:1. Here, the fertile TRU contain an even-numbered nuclear plutonium isotope of about 80% and MA of about 20%.

Fig. 4 shows the change in the void reactivity coefficient to the proportion of fertile TRU, with the horizontal axis as the proportion of fertile TRU (wt%) and the vertical axis as the void reactivity coefficient (pcm) . Here, the unit pcm of the void reactivity coefficient on the vertical axis is defined as percent mille = the percent of 1/1000 = 10⁻⁵. As shown in Fig. 4, as the proportion of fertile TRU among heavy metals increases, the void reactivity coefficient increases, and the proportion of fertile TRU of about 8.0 wt% is boundary at which the void reactivity coefficient changes from "negative" to "positive". After that, in the proportion of fertile TRU of 20 wt% or more, the void reactivity coefficient is constant. In other words, the inventors or the like of the present invention found that the void reactivity coefficient is not deteriorated even when the proportion of fertile TRU is increased by making the proportion of fertile TRU among heavy metals 20 wt% or more.

Thereby, as will be described in detail later, in a nuclear fuel having fuel effective regions (containing fertile TRU and fissile TRU) of two regions of the upper fuel region on the upper side and the lower fuel region on the lower side in the axial direction of the fuel effective region, by loading fertile TRU in the upper fuel region whose power becomes relatively high, the void reactivity coefficient does not deteriorate, that is, the reactor core characteristics can be maintained while burning the fertile TRU. This means that the incineration efficiency of fertile TRU can be increased.

Embodiments of the present invention in which the results of the above examination are reflected will be described below with reference to the drawings. In the following, a resource-renewable boiling water reactor (RBWR) will be described as an example, but the present invention is not limited thereto. For example, the present invention is equally applicable to other nuclear reactors such as an advanced boiling water reactor (ABWR), a common boiling water reactor (BWR) that is equipped with a recirculation pump and circulates cooling water by passing the cooling water as a moderator through the outside of the reactor pressure vessel and then flowing it back into the downcomer in the reactor pressure vessel, or an economic simplified boiling water reactor (ESBWR) that eliminates the need for the recirculation pump in the BWR and the internal pump in the ABWR by using a natural circulation method of cooling water by a chimney.

### [Embodiment 1]

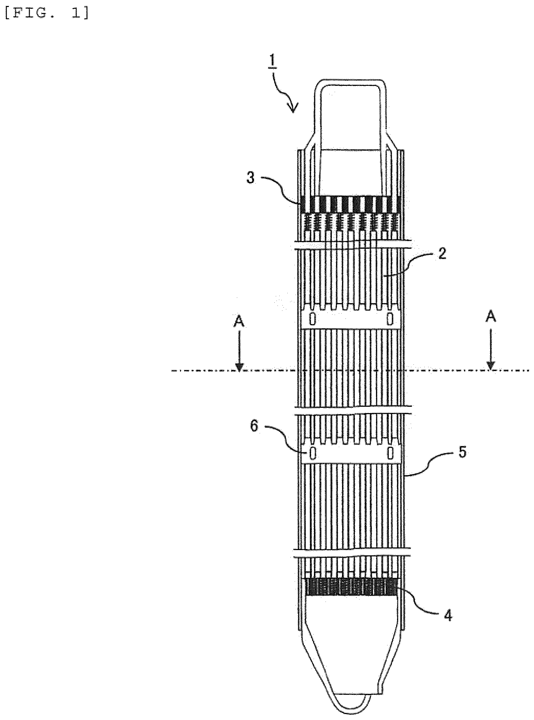

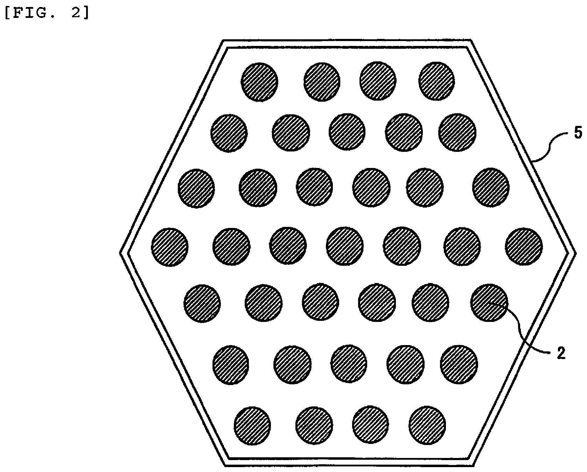

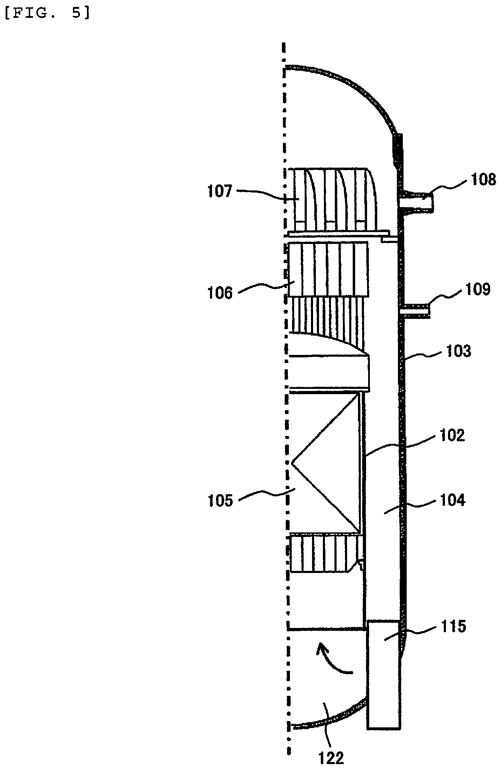

Fig. 1 is an overall schematic configuration diagram of a fuel assembly according to Embodiment 1 related to an embodiment of the present invention, Fig. 2 is a sectional view (horizontal sectional view) of the fuel assembly taken along line A-A of Fig. 1, and Fig. 5 is a schematic configuration diagram of a resource-renewable boiling water reactor (RBWR) including a reactor core loaded with the fuel assembly shown in Fig. 1.

As shown in Fig. 5, the resource-renewable boiling water reactor (RBWR) is provided with a cylindrical reactor core shroud 102 in a reactor pressure vessel (nuclear reactor vessel) 103, and a reactor core 105 loaded with a plurality of fuel assemblies (not shown) in the reactor core shroud 102. In the reactor pressure vessel (hereinafter referred to as RPV) 103, a steam-water separator 106 extending upward of the reactor core 105 and a steam dryer 107 disposed above the steam-water separator 106 are provided. An annular downcomer 104 is formed between the RPV 103 and the reactor core shroud 102. Inside the downcomer 104, an internal pump 115 is disposed.

The cooling water discharged from the internal pump 115 is supplied to the reactor core 105 through a lower plenum 122 . When passing through the reactor core 105, the cooling water is heated and becomes a gas-liquid two-phase flow containing water and steam. The steam-water separator 106 separates the gas-liquid two-phase flow into steam and water. The separated steam is subjected to dryer in the steam dryer 107 and guided to a main steam piping 108. This dried steam is led to a steam turbine (not shown) to rotate the steam turbine. A generator connected to the steam turbine rotates to generate electric power. The steam discharged from the steam turbine is condensed in a condenser (not shown) to become water. The condensed water is supplied as cooling water into the RPV 103 by a water supply piping 109. The water separated by steam-water separator 106 and the steam dryer 107 falls and reaches the inside of the downcomer 104 as cooling water.

Although not shown in Fig. 5, the lower plenum 122 of the RPV 103 is provided with a control rod guide pipe that allows insertion of a plurality of control rods having Y-shaped cross sections into the reactor core 105 in order to control the nuclear reaction of the fuel assembly, a control rod driving mechanism is provided in a control rod driving mechanism housing installed below a bottom part of the RPV 103, and the control rod is connected to the control rod driving mechanism. Here, the control rod having a Y-shaped cross section is provided with three blades extending outward from a tie rod located at the center, and each blade has a plurality of neutron absorbing rods filled with B₄C which is a neutron absorbing material. The three blades are arranged at an interval of 120 degrees around the tie rod. Then, one control rod having a Y-shaped cross section is inserted between three fuel assemblies adjacent to each other, among a plurality of fuel assemblies (described in detail later) loaded densely in a triangular lattice shape in the reactor core 105.

As shown in Fig. 1, the fuel assembly 1 includes a plurality of fuel rods 2, an upper tie plate 3, a lower tie plate 4, a plurality of fuel spacers 6, and a channel box 5. The fuel rod 2 is filled with a plurality of fuel pellets (not shown) in a sealed cladding tube (not shown). The lower tie plate 4 supports the lower end of each fuel rod 2, and the upper tie plate 3 holds the upper end of each fuel rod 2. As shown in Fig. 2, the fuel rods 2 are arranged in a triangular lattice form in the horizontal cross section of the fuel assembly 1. As shown in Fig. 1, the plurality of fuel spacers 6 are spaced apart from each other by a predetermined distance in the axial direction of the fuel assembly 1 and hold the fuel rods 2 to form a flow path through which cooling water flows between the fuel rods 2. A tube-shaped channel box 5 (Fig. 2) having a hexagonal cross section is attached to the upper tie plate 3 and extends downward. The respective fuel rods 2 bundled by the fuel spacer 6 are disposed in the channel box 5. A handle is fastened to an upper end of the upper tie plate 3, and the entire fuel assembly 1 can be pulled up when the handle is lifted.

Fig. 3 is an axial (height direction) distribution diagram of a nuclear fuel material used in the fuel assembly 1. As shown in Fig. 3, the fuel effective region 20 is configured of an upper fuel region 21, a blanket region 22, and a lower fuel region 23 from the upper end toward the lower end in the axial direction (height direction) of the fuel assembly 1. In Fig. 3, the case where the height of the fuel effective region 20 in the axial direction is 90 cm is shown as an example.

The upper fuel region 21 has a height of 20 cm in the axial direction and contains 54 wt% of fertile TRU, 27 wt% of fissile TRU, and 19 wt% of depleted uranium as a base material. The height of the blanket region 22 in the axial direction is 50 cm, and its fuel composition is 100 wt% of depleted uranium. The lower fuel region 23 has a height of 20 cm in the axial direction and contains 45 wt% of fertile TRU, 27 wt% of fissile TRU, and 28 wt% of depleted uranium as a base material.

Both the upper fuel region 21 and the lower fuel region 23 contain 20 wt% or more of fertile TRU. The proportion of fertile TRU contained in the upper fuel region 21 is greater than the proportion of fertile transuranium elements contained in the lower fuel region 23. By setting the composition distribution of the nuclear fuel material in the fuel effective region 20 in this way, it is possible to smooth out the axial power distribution of the reactor core 105, by suppressing the power from the upper fuel region 21, and improve the incineration efficiency of fertile TRU. Furthermore, by the upper part of the fuel effective region 20 in the axial direction, where the leakage of neutrons is large, having a cross section in which the void reactivity is positive, the power distribution becomes a upper part peak when the void fraction decreases, so the neutron leakage amount increases, and the effective multiplication factor of the reactor core 105 (Fig. 5) decreases, so as a result, it becomes possible to make the void reactivity coefficient of the reactor core 105 negative.

In FIG. 3, a case where the proportions of fissile TRU contained in the upper fuel region 21 and the lower fuel region 23 are equal to 27 wt% is shown as an example. However, the present invention is not limited thereto, and the proportions of fissile TRU in the upper fuel region 21and the lower fuel region 23 may be set to different values. In the present embodiment, the proportion of fertile TRU contained in the upper fuel region 21 is 54 wt% and the proportion of fertile TRU contained in the lower fuel region 23 is 45 wt%, but the present invention is not necessarily limited to these proportions. In other words, as long as the proportion of fertile TRU contained in the upper fuel region 21 and the lower fuel region 23 is 20 wt% or more, and the proportion of fertile TRU contained in the upper fuel region 21 is greater than the proportion of fertile TRU contained in the lower fuel region 23, any value may be used.

As described above, according to the present embodiment, it is possible to increase the incineration efficiency of fertile TRU while smoothing out the axial power distribution of the reactor core.

Further, even when the void fraction is lowered, it becomes possible to make the void reactivity coefficient of the reactor core negative.

### [Embodiment 2]

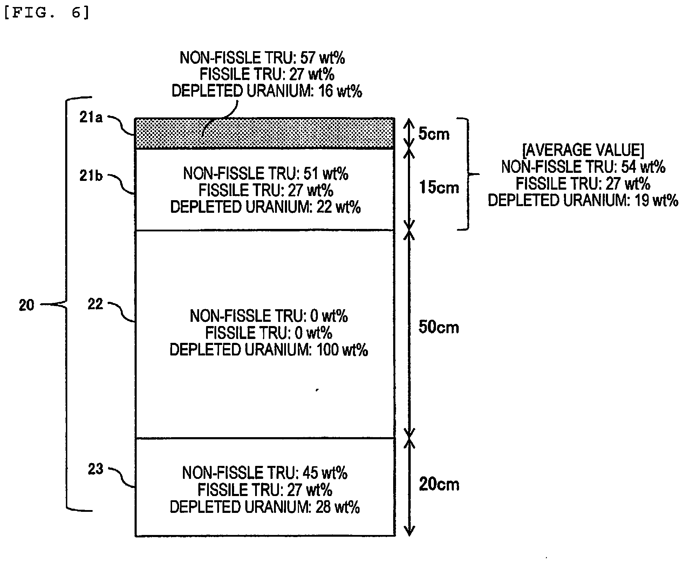

Fig. 6 is an axial (height direction) distribution diagram of a nuclear fuel material used in a fuel assembly of Embodiment 2 according to another embodiment of the present invention. The present embodiment differs from Embodiment 1 in that the upper fuel region constituting the fuel effective region is formed by a first upper fuel region and a second upper fuel region from the upper end of the fuel effective region, and the average value of the proportions of fertile TRU contained in the first upper fuel region and the second upper fuel region is greater than the proportion of fertile TRU contained in the lower fuel region. The other configuration is the same as that of Embodiment 1, and the description overlapped with Embodiment 1 will be omitted below.

As shown in Fig. 6, the fuel effective region 20 is configured of a first upper fuel region 21a, a second upper fuel region 21b, a blanket region 22, and a lower fuel region 23 from the upper end toward the lower end in the axial direction (height direction) of the fuel assembly 1. In Fig. 6, the case where the height of the fuel effective region 20 in the axial direction is 90 cm is shown as an example.

The first upper fuel region 21a has a height of 5 cm in the axial direction and contains 57 wt% of fertile TRU, 27 wt% of fissile TRU, and 16 wt% of depleted uranium as a base material. The second upper fuel region 21b has a height of 15 cm in the axial direction and contains 51 wt% of fertile TRU, 27 wt% of fissile TRU, and 22 wt% of depleted uranium as a base material. Further, the height of the blanket region 22 in the axial direction is 50 cm, and its fuel composition is 100 wt% of depleted uranium. The lower fuel region 23 has a height of 20 cm in the axial direction and contains 45 wt% of fertile TRU, 27 wt% of fissile TRU, and 28 wt% of depleted uranium as a base material. The average values of respective nuclear fuel materials in the first upper fuel region 21a and the second upper fuel region 21b are 54 wt% for fertile TRU, 27 wt% for fissile TRU, and 19 wt% for depleted uranium as a base material.

The first upper fuel region 21a, the second upper fuel region 21b, and the lower fuel region 23 contain 20 wt% or more of fertile TRU. Further, the average value of the proportions of fertile TRU in the first upper fuel region 21a and the second upper fuel region 21b is greater than the proportion of fertile transuranium elements contained in the lower fuel region 23. The proportion of fertile TRU in the first upper fuel region 21a is greater than the proportion of fertile transuranium elements in the second upper fuel region 21b. In other words, the region including the first upper fuel region 21a and the second upper fuel region 21b on the upper side of the fuel effective region 20 has a distribution of the proportion of fertile TRU.

Since an upper side above the upper end portion in the axial direction of the fuel effective region 20 is a region of steam, the moderation effect of the neutron is large, the fissile TRU easily causes reaction and the power tends to increase. Therefore, by adopting the composition distribution of the nuclear fuel material in the fuel effective region 20 as described above, since the fertile TRU in the first upper fuel region 21a and the second upper fuel region 21b, in particular, the fertile TRU in the first upper fuel region 21a increases, the power peak in the upper end in the axial direction of the fuel effective region 20 can be further reduced as compared with Embodiment 1, and the axial power distributions in the first upper fuel region 21a and the second upper fuel region 21b can be smoothed out.

In Fig. 6, a case where the proportions of fissile TRU in the first upper fuel region 21a, the second upper fuel region 21b, and the lower fuel region 23 are equal to 27 wt% is shown as an example. However, the present invention is not limited thereto, and the proportions of fissile TRU in the first upper fuel region 21a, the second upper fuel region 21b, and the lower fuel region 23 may be set to different values. In the present embodiment, the proportion of fertile TRU contained in the first upper fuel region 21a is 57 wt%, the proportion of fertile TRU contained in the second upper fuel region 21b is 51 wt%, and the proportion of fertile TRU contained in the lower fuel region 23 is 45 wt%, but the present invention is not necessarily limited to these proportions. In other words, as long as the proportion of fertile TRU contained in the first upper fuel region 21a, the second upper fuel region 21b, and the lower fuel region 23 is 20 wt% or more, and an average value of the proportions of fertile TRU contained in the first upper fuel region 21a and the second upper fuel region 21b is greater than the proportion of fertile TRU contained in the lower fuel region 23, any value may be used. In this case as well, it is desirable that the proportion of fertile TRU contained in the first upper fuel region 21a is made greater than the proportion of fertile TRU contained in the second upper fuel region 21b.

As described above, according to the present embodiment, in addition to the effect of Embodiment 1, it is possible to further reduce the axial power peak at the upper end of the fuel effective region as compared with Embodiment 1.

Further, it is possible to smooth out the axial power distribution in the first upper fuel region and the second upper fuel region.

### [Embodiment 3]

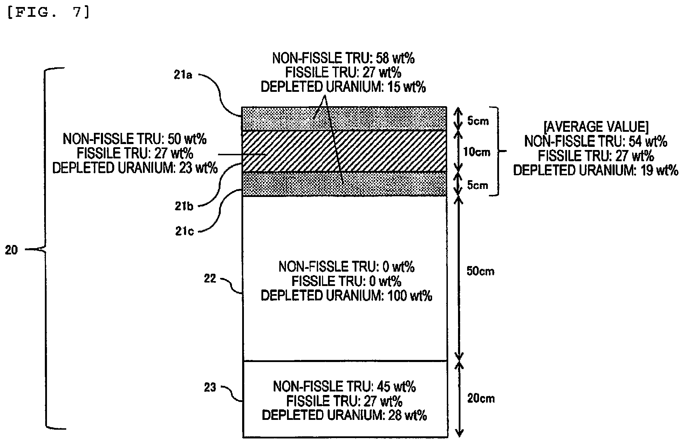

Fig. 7 is an axial (height direction) distribution diagram of a nuclear fuel material used in a fuel assembly of Embodiment 3 according to another embodiment of the present invention. The present embodiment differs from Embodiment 1 in that the upper fuel region constituting the fuel effective region is formed by the first upper fuel region, the second upper fuel region, and the third upper fuel region from the upper end of the fuel effective region, and the average value of the proportions of fertile TRU contained in the first upper fuel region, the second upper fuel region, and the third upper fuel region is greater than the proportion of fertile TRU contained in the lower fuel region. The other configuration is the same as that of Embodiment 1, and the description overlapped with Embodiment 1 will be omitted below.

As shown in Fig. 7, the fuel effective region 20 is configured of a first upper fuel region 21a, a second upper fuel region 21b, a third upper fuel region 21c, a blanket region 22, and a lower fuel region 23 from the upper end toward the lower end in the axial direction (height direction) of the fuel assembly 1. In Fig. 7, a case where the height of the fuel effective region 20 in the axial direction is 90 cm is shown as an example.

The first upper fuel region 21a has a height of 5 cm in the axial direction and contains 58 wt% of fertile TRU, 27 wt% of fissile TRU, and 15 wt% of depleted uranium as a base material. The second upper fuel region 21b has a height of 10 cm in the axial direction and contains 50 wt% of fertile TRU, 27 wt% of fissile TRU, and 23 wt% of depleted uranium as a base material. The third upper fuel region 21c has a height of 5 cm in the axial direction and contains 58 wt% of fertile TRU, 27 wt% of fissile TRU, and 15 wt% of depleted uranium as a base material. Further, the height of the blanket region 22 in the axial direction is 50 cm, and its fuel composition is 100 wt% of depleted uranium. The lower fuel region 23 has a height of 20 cm in the axial direction and contains 45 wt% of fertile TRU, 27 wt% of fissile TRU, and 28 wt% of depleted uranium as a base material. The average values of respective nuclear fuel materials in the first upper fuel region 21a, the second upper fuel region 21b, and the third upper fuel region 21c are 54 wt% for fertile TRU, 27 wt% for fissile TRU, and 19 wt% for depleted uranium as a base material.

All of the first upper fuel region 21a, the second upper fuel region 21b, the third upper fuel region 21c, and the lower fuel region 23 contain 20 wt% or more of fertile TRU alike. Further, the average value of the proportions of fertile TRU in the first upper fuel region 21a, the second upper fuel region 21b, and third upper fuel region 21c is greater than the proportion of fertile transuranium elements contained in the lower fuel region 23. The proportions of fertile TRU in the first upper fuel region 21a and third upper fuel region 21c are identical to each other, and are greater than the proportion of fertile TRU in the second upper fuel region 21b. In other words, the region including the first upper fuel region 21a, the second upper fuel region 21b, and the third upper fuel region 21c on the upper side of the fuel effective region 20 has a distribution of the proportion of fertile TRU.

Since the lower end of the third upper fuel region 21c is adjacent to the upper end of the blanket region 22, neutron spectrum therein is softer than in the other first upper fuel region 21a, the second upper fuel region 21b, and the lower fuel region 23. This is the same as the effect in above-described Embodiment 2, and an power peak occurs also in the lower end of the third upper fuel region 21c. Therefore, by adopting the composition distribution of the nuclear fuel material in the fuel effective region 20 as described above, since the fertile TRU in the first upper fuel region 21a, the second upper fuel region 21b, and third upper fuel region 21c, in particular, the fertile TRU in the third upper fuel region 21c increases, the power peak in the lower end in the third upper fuel region 21c adjacent to the blanket region 22 can be reduced, and the power distributions in the first upper fuel region 21a to the third upper fuel region 21c can be smoothed out.

In Fig. 7, a case where the proportions of fissile TRU in the first upper fuel region 21a, the second upper fuel region 21b, the third upper fuel region 21c, and the lower fuel region 23 are identical to 27 wt% is shown as an example. However, the present invention is not limited thereto, and the proportions of fissile TRU in the first upper fuel region 21a, the second upper fuel region 21b, the third upper fuel region 21c, and the lower fuel region 23 may be set to different values. In the present embodiment, the proportion of fertile TRU contained in the first upper fuel region 21a and the third upper fuel region 21c is 58 wt%, the proportion of fertile TRU contained in the second upper fuel region 21b is 50 wt%, and the proportion of fertile TRU contained in the lower fuel region 23 is 45 wt%, but the present invention is not necessarily limited to these proportions. In other words, as long as the proportion of fertile TRU contained in the first upper fuel region 21a, the second upper fuel region 21b, the third upper fuel region 21c, and the lower fuel region 23 is 20 wt% or more, and an average value of the proportions of fertile TRU contained in the first upper fuel region 21a, the second upper fuel region 21b, and the third upper fuel region 21c is greater than the proportion of fertile TRU contained in the lower fuel region 23, any value may be used.

The proportion of fertile TRU contained in the first upper fuel region 21a may be greater than the proportion of fertile TRU contained in the third upper fuel region 21c, and the proportion of fertile TRU contained in the third upper fuel region 21c may be greater than the proportion of fertile TRU contained in the second upper fuel region 21b. In this case, since the upper side above the upper end portion in the axial direction of the fuel effective region 20 is a region of steam, the moderation effect of the neutron is large, the fissile TRU causes reaction easily and the power tends to increase. Therefore, by maximizing the proportion of fertile TRU contained in the first upper fuel region 21a, the power peak at the upper end in the axial direction of the fuel effective region 20 can be further reduced as compared with Embodiment 1. Further, by making the proportion of fertile TRU contained in the third upper fuel region 21c adjacent to the blanket region 22 at the lower end greater than the proportion of fertile TRU contained in the second upper fuel region 21b, it is possible to more effectively reduce the power peak at the lower end of the third upper fuel region 21c.

As described above, according to the present embodiment, in addition to the effect of the above-described Embodiment 2, the power peak at the lower end of the third upper fuel region adjacent to the blanket region can be reduced, and the axial power distribution in the first upper fuel region, the second upper fuel region and the third upper fuel region can be further smoothed out.

It should be noted that the present invention is not limited to each of the above-described embodiments, and various modifications are included. For example, the above-described embodiments have been described in detail in order to explain the present invention in an easy-to-understand manner and are not necessarily limited to those having all the configurations described.

### Reference Signs List

- 1:: fuel assembly
- 2:: fuel rod
- 3:: upper tie plate
- 4:: lower tie plate
- 5:: channel box
- 6:: fuel spacer
- 20:: fuel effective region
- 21:: upper fuel region
- 21a:: first upper fuel region
- 21b:: second upper fuel region
- 21c:: third upper fuel region
- 22:: blanket region
- 23:: lower fuel region
- 102:: reactor core shroud
- 103:: reactor pressure vessel
- 104:: downcomer
- 105:: reactor core
- 106:: steam-water separator
- 107:: steam dryer
- 108:: main steam piping
- 109:: water supply piping
- 115:: internal pump
- 122:: lower plenum

## Claims

1. A fuel assembly having an upper fuel region (21) and a lower fuel region (23) along an axial direction, wherein a proportion of fertile transuranium elements among heavy metals in the upper fuel region (21) and the lower fuel region (23) is 20 wt% or more, and **characterized in that** a proportion of fertile transuranium elements contained in the upper fuel region (21) is greater than the proportion of fertile transuranium elements contained in the lower fuel region (23), when the fuel assembly is loaded into a nuclear reactor core.

2. The fuel assembly according to claim 1, wherein
the upper fuel region (21) has a first upper fuel region (21a) and a second upper fuel region (21b) from an upper end thereof in the axial direction, an average value of proportions of fertile transuranium elements contained in the first upper fuel region (21a) and the second upper fuel region (21b) is greater than the proportion of fertile transuranium elements contained in the lower fuel region (23), and
a proportion of fertile transuranium elements contained in the first upper fuel region (21a) is greater than the proportion of fertile transuranium elements contained in the second upper fuel region (21b).

3. The fuel assembly according to claim 1, wherein
the upper fuel region (21) has a first upper fuel region (21a), a second upper fuel region (21b), and a third upper fuel region (21c) from an upper end thereof in the axial direction, and an average value of proportions of fertile transuranium elements contained in the first upper fuel region (21a), the second upper fuel region (21b), and the third upper fuel region (21c) is greater than the proportion of fertile transuranium elements contained in the lower fuel region (23).

4. The fuel assembly according to claim 3, wherein
a proportion of fertile transuranium elements contained in the first upper fuel region (21a) and the third upper fuel region (21c) is greater than the proportion of fertile transuranium elements contained in the second upper fuel region (21b).

5. The fuel assembly according to claim 4, wherein
the proportion of fertile transuranium elements contained in the first upper fuel region (21a) is equal to the proportion of fertile transuranium elements contained in the third upper fuel region (21c).

6. The fuel assembly according to claim 4, wherein
the proportion of fertile transuranium elements contained in the first upper fuel region (21a) is greater than the proportion of fertile transuranium elements contained in the third upper fuel region (21c).

7. The fuel assembly according to claim 1, wherein
a blanket region (22) including only depleted uranium is provided between the upper fuel region (21) and the lower fuel region (23), and
a height of the blanket region (23) in the axial direction is greater than heights of the upper fuel region (21) and the lower fuel region (23) in the axial direction.

8. A nuclear reactor core loaded with a plurality of fuel assemblies according to claim 1.

9. The nuclear reactor core according to claim 8, wherein
the upper fuel region (21) has a first upper fuel region (21a) and a second upper fuel region (21b) from an upper end thereof in the axial direction, an average value of proportions of fertile transuranium elements contained in the first upper fuel region (21a) and the second upper fuel region (21b) is greater than the proportion of fertile transuranium elements contained in the lower fuel region (23), and
the proportion of fertile transuranium elements contained in the first upper fuel region (21a) is greater than a proportion of fertile transuranium elements contained in the second upper fuel region (21b).

10. The nuclear reactor core according to claim 8, wherein
the upper fuel region (21) has a first upper fuel region (21a), a second upper fuel region (21b), and a third upper fuel region (21c) from an upper end thereof in the axial direction, and an average value of proportions of fertile transuranium elements contained in the first upper fuel region (21a), the second upper fuel region (21b), and the third upper fuel region (21c) is greater than the proportion of fertile transuranium elements contained in the lower fuel region (23).

11. The nuclear reactor core according to claim 10, wherein
a proportion of fertile transuranium elements contained in the first upper fuel region (21a) and the third upper fuel region (21c) is greater than the proportion of fertile transuranium elements contained in the second upper fuel region (21b).

12. The nuclear reactor core according to claim 11, wherein
the proportion of fertile transuranium elements contained in the first upper fuel region (21a) is equal to the proportion of fertile transuranium elements contained in the third upper fuel region (21c).

13. The nuclear reactor core according to claim 11, wherein
the proportion of fertile transuranium elements contained in the first upper fuel region (21a) is larger than the proportion of fertile transuranium elements contained in the third upper fuel region (21c).

14. The nuclear reactor core according to claim 8, wherein
a blanket region (22) including only depleted uranium is provided between the upper fuel region (21) and the lower fuel region (23), and
a height of the blanket region (22) in the axial direction is greater than heights of the upper fuel region (21) and the lower fuel region (23) in the axial direction.

## Patentansprüche

1. Brennelement, das in einer axialen Richtung einen oberen Brennbereich (21) und einen unteren Brennbereich (23) aufweist, wobei
ein Anteil brütbarer Transuranelemente aus Schwermetallen in dem oberen Brennbereich (21) und dem unteren Brennbereich (23) 20 Gew.-% oder mehr beträgt, und **dadurch gekennzeichnet, dass**
ein Anteil brütbarer Transuranelemente, die in dem oberen Brennbereich (21) enthalten sind, größer als der Anteil brütbarer Transuranelemente ist, die in dem unteren Brennbereich (23) enthalten sind, wenn das Brennelement in einen Kernreaktorkern geladen ist.

2. Brennelement nach Anspruch 1, wobei
der obere Brennbereich (21) ausgehend von einem oberen Ende in axialer Richtung einen ersten oberen Brennbereich (21a) und einen zweiten oberen Brennbereich (21b) aufweist und wobei ein Mittelwert von Anteilen brütbarer Transuranelemente, die in dem ersten oberen Brennbereich (21a) und in dem zweiten oberen Brennbereich (21b) enthalten sind, größer ist als der Anteil brütbarer Transuranelemente, die in dem unteren Brennbereich (23) enthalten sind, und
ein Anteil brütbarer Transuranelemente, die in dem ersten oberen Brennbereich (21a) enthalten sind, größer als der Anteil brütbarer Transuranelemente ist, die in dem zweiten oberen Brennbereich (21b) enthalten sind.

3. Brennelement nach Anspruch 1, wobei
der obere Brennbereich (21) ausgehend von einem oberen Ende in axialer Richtung einen ersten oberen Brennbereich (21a), einen zweiten oberen Brennbereich (21b) und einen dritten oberen Brennbereich (21c) aufweist und wobei ein Mittelwert von Anteilen brütbarer Transuranelemente, die in dem ersten oberen Brennbereich (21a), dem zweiten oberen Brennbereich (21b) und dem dritten oberen Brennbereich (21c) enthalten sind, größer ist als der Anteil brütbarer Transuranelemente, die in dem unteren Brennbereich (23) enthalten sind.

4. Brennelement nach Anspruch 3, wobei
ein Anteil brütbarer Transuranelemente, die in dem ersten oberen Brennbereich (21a) und dem dritten oberen Brennbereich (21c) enthalten sind, größer ist als der Anteil brütbarer Transuranelemente, die in dem zweiten oberen Brennbereich (21b) enthalten sind.

5. Brennelement nach Anspruch 4, wobei
der Anteil brütbarer Transuranelemente, die in dem ersten oberen Brennbereich (21a) enthalten sind, gleich dem Anteil brütbarer Transuranelemente ist, die in dem dritten oberen Brennbereich (21c) enthalten sind.

6. Brennelement nach Anspruch 4, wobei
der Anteil brütbarer Transuranelemente, die in dem ersten oberen Brennbereich (21a) enthalten sind, größer ist als der Anteil brütbarer Transuranelemente, die in dem dritten oberen Brennbereich (21c) enthalten sind.

7. Brennelement nach Anspruch 1, wobei
zwischen dem oberen Brennbereich (21) und dem unteren Brennbereich (23) ein Brutzonenbereich (22) vorgesehen ist, der nur abgereichertes Uran aufweist, und
eine Höhe des Brutzonenbereichs (23) in axialer Richtung größer ist als die Höhen des oberen Brennbereichs (21) und des unteren Brennbereichs (23) in axialer Richtung.

8. Kernreaktorkern, der mit mehreren Brennelementen nach Anspruch 1 beschickt ist.

9. Kernreaktorkern nach Anspruch 8, wobei
der obere Brennbereich (21) ausgehend von einem oberen Ende in axialer Richtung einen ersten oberen Brennbereich (21a) und einen zweiten oberen Brennbereich (21b) aufweist und wobei ein Mittelwert von Anteilen brütbarer Transuranelemente, die in dem ersten oberen Brennbereich (21a) und dem zweiten oberen Brennbereich (21b) enthalten sind, größer ist als der Anteil brütbarer Transuranelemente, die in dem unteren Brennbereich (23) enthalten sind, und
der Anteil brütbarer Transuranelemente, die in dem ersten oberen Brennbereich (21a) enthalten sind, größer ist als ein Anteil brütbarer Transuranelemente, die in dem zweiten oberen Brennbereich (21b) enthalten sind.

10. Kernreaktorkern nach Anspruch 8, wobei
der obere Brennbereich (21) ausgehend von einem oberen Ende in axialer Richtung einen ersten oberen Brennbereich (21a), einer zweiten oberen Brennbereich (21b) und einen dritten oberen Brennbereich (21c) aufweist und wobei ein Mittelwert von Anteilen brütbarer Transuranelemente, die in dem ersten oberen Brennbereich (21a), dem zweiten oberen Brennbereich (21b) und dem dritten oberen Brennbereich (21c) enthalten sind, größer ist als der Anteil brütbarer Transuranelemente, die in dem unteren Brennbereich (23) enthalten sind.

11. Kernreaktorkern nach Anspruch 10, wobei
ein Anteil brütbarer Transuranelemente, die in dem ersten oberen Brennbereich (21a) und dem dritten oberen Brennbereich (21c) enthalten sind, größer ist als der Anteil brütbarer Transuranelemente, die in dem zweiten oberen Brennbereich (21b) enthalten sind.

12. Kernreaktorkern nach Anspruch 11, wobei
der Anteil brütbarer Transuranelemente, die in dem ersten oberen Brennbereich (21a) enthalten sind, gleich dem Anteil brütbarer Transuranelemente ist, die in dem dritten oberen Brennbereich (21c) enthalten sind.

13. Kernreaktorkern nach Anspruch 11, wobei
der Anteil brütbarer Transuranelemente, die in dem ersten oberen Brennbereich (21a) enthalten sind, größer ist als der Anteil brütbarer Transuranelemente, die dem dritten oberen Brennbereich (21c) enthalten sind.

14. Kernreaktorkern nach Anspruch 8, wobei
zwischen dem oberen Brennbereich (21) und dem unteren Brennbereich (23) ein Brutzonenbereich (22) vorgesehen ist, der nur abgereichertes Uran umfasst, und
eine Höhe des Brutzonenbereichs (92) in axialer Richtung größer ist als die Höhen des oberen Brennbereichs (21) und des unteren Brennbereichs (23) in axialer Richtung.

## Revendications

1. Assemblage de combustible ayant une région de combustible supérieure (21) et une région de combustible inférieure (23) le long d'une direction axiale, dans lequel
une proportion d'éléments transuraniens fertiles parmi des métaux lourds dans la région de combustible supérieure (21) est dans la région de combustible inférieure (23) et de 20 % en poids ou plus, et
**caractérisé en ce que**
une proportion des éléments transuraniens fertiles contenus dans la région de combustible supérieure (21) est plus grande que la proportion des éléments transuraniens fertiles contenus dans la région de combustible inférieure (23), quand l'assemblage de combustible est chargé dans un cœur de réacteur nucléaire.

2. Assemblage de combustible selon la revendication 1, dans lequel la région de combustible supérieure (21) a une première région de combustible supérieure (21a) et une seconde région de combustible supérieure (21b) depuis une extrémité supérieure de celle-ci dans la direction axiale, une valeur moyenne des proportions des éléments transuraniens fertiles contenus dans la première région de combustible supérieure (21a) et de la seconde région de combustible supérieure (21b) est plus grande que la proportion des éléments transuraniens fertiles contenus dans la région de combustible inférieure (23), et
une proportion des éléments transuraniens fertiles contenus dans la première région de combustible supérieure (21a) est plus grande que la proportion des éléments transuraniens fertiles contenus dans la seconde région de combustible supérieure (21b).

3. Assemblage de combustible selon la revendication 1, dans lequel la région de combustible supérieure (21) a une première région de combustible supérieure (21a), une seconde région de combustible supérieure (21b), et une troisième région de combustible supérieure (21c) depuis une extrémité supérieure de celle-ci dans la direction axiale, et une valeur moyenne des proportions des éléments transuraniens fertiles contenus dans la première région de combustible supérieure (21a), dans la seconde région de combustible supérieure (21b) et dans la troisième région de combustible supérieure (21c) est plus grande que la proportion des éléments transuraniens fertiles contenus dans la région de combustible inférieure (23).

4. Assemblage de combustible selon la revendication 3, dans lequel une proportion des éléments transuraniens fertiles contenus dans la première région de combustible supérieure (21a) et dans la troisième région de combustible supérieure (21c) est plus grande que la proportion des éléments transuraniens fertiles contenus dans la seconde région de combustible supérieure (21b).

5. Assemblage de combustible selon la revendication 4, dans lequel la proportion des éléments transuraniens fertiles contenus dans la première région de combustible supérieure (21a) est égale à la proportion des éléments transuraniens fertiles contenus dans la troisième région de combustible supérieure (21c).

6. Assemblage de combustible selon la revendication 4, dans lequel la proportion des éléments transuraniens fertiles contenus dans la première région de combustible supérieure (21a) est plus grande que la proportion des éléments transuraniens fertiles contenus dans la troisième région de combustible supérieure (21c).

7. Assemblage de combustible selon la revendication 1, dans lequel une région de chemise (22) incluant uniquement de l'uranium appauvri est prévue entre la région de combustible supérieure (21) et la région de combustible inférieure (23), et
une hauteur de la région de chemise (23) dans la direction axiale est plus grande que les hauteurs de la région de combustible supérieure (21) et de la région de combustible inférieure (23) dans la direction axiale.

8. Cœur de réacteur nucléaire chargé avec une pluralité d'assemblages de combustible selon la revendication 1.

9. Cœur de réacteur nucléaire selon la revendication 8, dans lequel
la région de combustible supérieure (21) a une première région de combustible supérieure (21a) et une seconde région de combustible supérieure (21b) depuis une extrémité supérieure de celle-ci dans la direction axiale, une valeur moyenne des proportions des éléments transuraniens fertiles contenus dans la première région de combustible supérieure (21a) et dans la seconde région de combustible supérieure (21b) est plus grande que la proportion des éléments transuraniens fertiles contenus dans la région de combustible inférieure (23), et
la proportion des éléments transuraniens fertiles contenus dans la première région de combustible supérieure (21a) est plus grande qu'une proportion des éléments transuraniens fertiles contenus dans la seconde région de combustible supérieure (21b).

10. Cœur de réacteur nucléaire selon la revendication 8, dans lequel
la région de combustible supérieure (21) a une première région de combustible supérieure (21a), une seconde région de combustible supérieure (21b), et une troisième région de combustible supérieure (21c) depuis une extrémité supérieure de de celle-ci dans la direction axiale, et une valeur moyenne des proportions des éléments transuraniens fertiles contenus dans la première région de combustible supérieure (21a), dans la seconde région de combustible supérieure (21b), et dans la troisième région de combustible supérieure (21c) est plus grande que la proportion des éléments transuraniens fertiles contenus dans la région de combustible inférieure (23).

11. Cœur de réacteur nucléaire selon la revendication 10, dans lequel
une proportion des éléments transuraniens fertiles contenus dans la première région de combustible supérieure (21a) et dans la troisième région de combustible supérieure (21c) est plus grande que la proportion des éléments transuraniens fertiles contenus dans la seconde région de combustible supérieure (21b).

12. Cœur de réacteur nucléaire selon la revendication 11, dans lequel
la proportion des éléments transuraniens fertiles contenus dans la première région de combustible supérieure (21a) est égale à la proportion des éléments transuraniens fertiles contenus dans la troisième région de combustible supérieure (21c).

13. Cœur de réacteur nucléaire selon la revendication 11, dans lequel
la proportion des éléments transuraniens fertiles contenus dans la première région de combustible supérieure (21a) et plus grande que la proportion des éléments transuraniens fertiles contenus dans la troisième région de combustible supérieure (21c).

14. Cœur de réacteur nucléaire selon la revendication 8, dans lequel
une région de chemise (22) incluant uniquement de l'uranium appauvri est prévue entre la région de combustible supérieure (21) et la région de combustible inférieure (23), et
une hauteur de la région de chemise (22) dans la direction axiale est plus grande que les hauteurs de la région de combustible supérieure (21) et de la région de combustible inférieure (23) dans la direction axiale.
